# EUROPEAN PATENT SPECIFICATION

(11) **EP 2 858 388 B1**
(45) Date of publication and mention of the grant of the patent: **08.08.2018**
(21) Application number: 13797279.0
(22) Date of filing: 03.06.2013
(51) Int. Cl.: H04W 4/12, H04L 12/58, H04L 29/06

(54) **MESSAGE SENDING METHOD**
VERFAHREN ZUM SENDEN VON NACHRICHTEN
PROCÉDÉ DE TRANSMISSION DE MESSAGES

(30) Priority: 01.06.2012 CN 201210178889
(43) Date of publication of application: 08.04.2015
(73) Proprietor: ZTE Corporation, Shenzhen, Guangdong 518057 (CN)
(72) Inventor: LU, Yan, Shenzhen Guangdong 518057 (CN); DING, Xin, Shenzhen Guangdong 518057 (CN)
(74) Representative: Modiano, Micaela Nadia
(86) International application number: PCT/CN2013/076673
(87) International publication number: WO 2013/178096

(56) References cited:
- CN-A- 101 699 806
- CN-A- 101 730 009
- US-A1- 2003 179 112
- US-A1- 2004 181 550
- US-A1- 2011 111 776

## Description

### TECHNICAL FIELD

The disclosure relates to the field of communications, in particular to a method, system and client for message sending.

### BACKGROUND

In recent years, along with the rapid development of mobile communications and network technologies, communication services in various forms have emerged, such as short message, multimedia message, Email and voice mail. Communication or information transmission with short messages, multimedia messages, E-mails, voice mails or the like has become an indispensable part of people's daily work and life. Interworking between different services currently becomes an urgent need for a user.

In the prior art, there are schemes of converting a media message into another form for final transmission to a receiver, and in some of the schemes, a message receiver can be determined to be a user of another service system by a certain effective judgment means, and then a server converts the message into another service message for transmission to the user. For example, a Multimedia Message Service (MMS) user may send a multimedia message to an E-mail user, the address of a receiver of the MMS user is usually a mobile phone number, and if the address of the receiver is in an E-mail address format, the server then converts the multimedia message into an E-mail for transmission to the receiver according to the type of the address of the receiver; and in some other schemes, after determining that the receiver cannot receive a certain media message, the server converts the media message into a message form which can be successfully received by the receiver automatically or after querying the setting of a receiving user, but a sending user cannot actively initiate interworking between different service systems under such a condition.

However, in practical application, there is a need in interworking between different service systems actively initiated by the sending user, for example, a voice mailbox service user stores a voice message in a network memory, and wants to directly forward the message in a network to another user in form of short message or multimedia message, namely to send a recorded voice mail to an opposite party in form of short message, multimedia message, E-mail or the like; or, when learning about that the voice mail is failed to be sent (the message failed to be sent has been stored in a network storage server) through a system notice, the voice mailbox service user wants to select another service form by himself rather than by the system to send the voice mail. But there is yet no related technical solution of actively initiating service interworking by a message sender, so poor user experiences may be caused.

US 2003/0179112 discusses systems and methods for data conversion.

### SUMMARY

To this end, a main purpose of the embodiments of the disclosure is to provide a method, system and client for message sending, which can improve user experiences.

In order to achieve the purpose, the invention is specified as follows: A method for message sending is provided, as recited in claim 1.

According to the method, systems and client for message sending in the embodiments of the disclosure, a message sending client sends a remote message forwarding request to a network side, the remote message forwarding request at least containing a remote content identifier, forwarding indication information and message receiver information; and the network side acquires a message content according to the remote message forwarding request, and sends the message content to a message receiver in a message form indicated by the forwarding indication information. By the technical solution of the embodiments of the disclosure, the message sender can actively select service interworking, so that user experiences can be improved.

### BRIEF DESCRIPTION OF THE DRAWINGS

Fig. 1 is a flowchart of a method for message sending according to an embodiment of the disclosure;
Fig. 2 is a structure diagram of a system for message sending according to an embodiment of the disclosure;
Fig. 3 is a structure diagram of a system according to embodiment 1 of the disclosure;
Fig. 4 is a flowchart of signalling according to embodiment 1 of the disclosure;
Fig. 5 is a structure diagram of a system according to embodiment 2 of the disclosure; and
Fig. 6 is a flowchart of signalling according to embodiment 2 of the disclosure.

### DETAILED DESCRIPTION

The basic idea of the embodiments of the disclosure is that: a message sending client sends a remote message forwarding request to a network side, the remote message forwarding request at least containing a remote content identifier, forwarding indication information and message receiver information; and the network side acquires a message content according to the remote message forwarding request, and sends the message content to a message receiver in a message form indicated by the forwarding indication information.

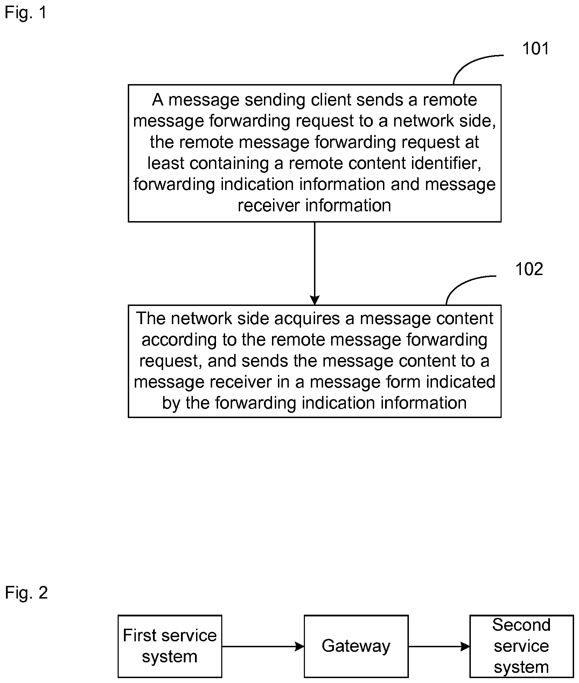

Fig. 1 is a flowchart of a method for message sending according to an embodiment of the disclosure, and as shown in Fig. 1, the method includes the following steps.

Step 101: A message sending client sends a remote message forwarding request to a network side, the remote message forwarding request at least containing a remote content identifier, forwarding indication information and message receiver information;
if the client wants to forward a certain media or voice message in a server, the above step can specifically be divided into two steps:
step 1: a remote message packaging process is executed;
   the client sends a remote message splice packaging request, specifically, the client sends a message, the message specifying the receiver information, the forwarding indication information and a message identifier (Uniform Resource Locator (URL) or message number) of a remote media or media message to be forwarded. The server packages the receiver information, the forwarding indication information and the media or media message to be forwarded which is specified by the message identifier to generate a new media message after receiving the message, and returns an identifier of the new media message, i.e. the remote content identifier (message number or URL) to the client; if the identifier of the packaged message returned by the server is the message number, the client may further send a message to the server to acquire a new URL; and
step 2: the client submits the remote content identifier to the server.

Step 102: the network side acquires a message content according to the remote message forwarding request, and sends the message content to a message receiver in a message form indicated by the forwarding indication information

Optionally, the remote content identifier is a content number or a content URI.

Optionally, that the network side sends the message content to the message receiver in the message form indicated by the forwarding indication information includes that:
the network side packages and generates a remote message according to the message content, the message form indicated by the forwarding indication information and the message receiver information, and sends a remote content identifier corresponding to the packaged remote message to the message sending client; and
the network side receives the remote content identifier submitted by the message sending client, and sends the remote message corresponding to the remote content identifier to the message receiver.

Optionally, that the network side acquires the message content according to the remote message forwarding request, and sends the message content to the message receiver in the message form indicated by the forwarding indication information includes that:
a first service system receives the remote message forwarding request from the message sending client, wherein the forwarding indication information in the remote message forwarding request indicates the message form corresponding to a second service system; and
the first service system acquires the message content according to the remote message forwarding request, and sends the message content through the second service system to the message receiver in the message form which is indicated by the forwarding indication information and corresponds to the second service system.

Optionally, when the remote content identifier indicates the message content includes all of message contents to be forwarded to the message receiver, the first service system acquires the message content according to the remote message forwarding request includes that: all the message contents are acquired according to the remote content identifier; and
when the remote content identifier indicates the message content includes a part of message contents to be forwarded to the message receiver, and the remote message forwarding request further contains a part of message contents, the first service system acquires the message content according to the remote content identifier includes that: a part of message contents are acquired according to the remote content identifier, and all the message contents are acquired by combining the message contents acquired according to the remote content identifier and the message contents contained in the remote message forwarding request.

Optionally, that the first service system acquires the message content according to the remote message forwarding request includes that: all the message contents or a part of message contents are acquired from a remote server according to the remote content identifier. Here, the remote server may be located in the first service system or outside the first service system, and specifically, when located in the first service system, the remote server may serve as an independent server, and may also be combined with another server (such as a service server of the first service system) in the first service system.

Optionally, in step 102, that the first service system acquires the message content according to the remote message forwarding request, and sends the message content through the second service system to the message receiver in the message form which is indicated by the forwarding indication information and corresponds to a second service system includes that:
the first service system determines that the message is required to be sent from the first service system to another service system according to the forwarding indication information in the remote message forwarding request, then acquires the message content according to the remote message forwarding request, and generates a first service message, the first service message at least containing the message content, the forwarding indication information and the message receiver information;
the first service system sends the first service message to a gateway for interworking with multiple service systems, the multiple service systems including the second service system; and
the gateway for interworking with the multiple service systems determines that the first service message is required to be sent to the second service system, then converts the first service message or the first service message from which the forwarding indication information has been removed into a second service message according to the forwarding indication information contained in the first service message, and sends the second service message to the message receiver through the second service system.

Optionally, in step 102, that the first service system acquires the message content according to the remote message forwarding request, and sends the message content through the second service system to the message receiver in the message form which is indicated by the forwarding indication information and corresponds to the second service system includes that:
the first service system determines that the message is required to be sent from the first service system to the second service system according to the forwarding indication information, then acquires the message content according to the remote message forwarding request, and generates a first service message, the first service message at least containing the message content and the message receiver information;
the first service system sends the first service message to a gateway dedicated for interworking with the second service system; and
the gateway dedicated for interworking with the second service system converts the first service message into a second service message, and sends the second service message to the message receiver through the second service system.

Optionally, when the first service message is a message encapsulated by an MIME protocol, that the first service message contains the forwarding indication information refers to that: the forwarding indication information is contained in a header in a message packet encapsulated by the MIME protocol, or is contained as a parameter of a forwarding request instruction. For example, when the first service message is an E-mail or a visual voice mail, the forwarding indication information is sent to the service server as a parameter in a Simple Mail Transfer Protocol (SMTP) instruction or through the header in the message packet encapsulated by the MIME protocol.

It should be noted that the operation executed by the first service system and the second service system is generally finished by their respective service servers; in the disclosure, the gateway may be combined with or separated from the service server in the first service system or the service server in the second service system.

The embodiment of the disclosure correspondingly discloses a client, which includes a remote message forwarding request generation module and a sending module, wherein
the remote message forwarding request generation module is configured to generate a remote message forwarding request according to user operation, the remote message forwarding request at least containing a remote content identifier, forwarding indication information and message receiver information; and
the sending module is configured to send the remote message forwarding request generated by the remote message forwarding request generation module to a network side.

Optionally, the client further includes a receiving module, wherein
the receiving module is configured to receive a remote content identifier corresponding to a remote message packaged by the network side; and
the sending module is further configured to send the remote content identifier corresponding to the packaged remote message to the network side.

The embodiment of the disclosure correspondingly discloses a system for message sending, Fig. 2 is a structure diagram of the system for message sending according to the embodiment of the disclosure, and as shown in Fig. 2, the system includes a first service system, a gateway and a second service system, wherein
the first service system is configured to receive a remote message forwarding request from a message sender, the remote message forwarding request at least containing a remote content identifier, forwarding indication information and message receiver information, wherein the forwarding indication information indicates a message form corresponding to the second service system; the first service system acquires a message content according to the remote message forwarding request when determining that a message is required to be sent from the first service system to another service system according to the forwarding indication information, generates a first service message, the first service message at least containing the message content, the forwarding indication information and the message receiver information, and then sends the first service message to the gateway;
the gateway is configured to, after determining that the first service message is required to be sent to the second service system according to the forwarding indication information contained in the first service message, convert the first service message or the first service message from which the forwarding indication information has been removed into a second service message, and send the second service message to the second service system, wherein the gateway is responsible for realizing interworking between the first service system and multiple service systems, and the multiple service systems include the second service system; and
the second service system is configured to send the second service message to a message receiver.

Optionally, the system further includes a remote server, wherein
the first service system is specifically configured to acquire all of message contents or a part of message contents from the remote server according to the remote content identifier.

Optionally, the first service system is further configured to send a remote content identifier corresponding to the first service message to a message sending client, and send the first service message to the gateway after receiving the remote content identifier submitted by the message sending client.

The disclosure correspondingly discloses a system for message sending, of which a structure diagram is also as shown in Fig. 2, the system including a first service system, a gateway and a second service system, wherein
the first service system is configured to receive a remote message forwarding request from a message sender, the remote message forwarding request at least containing a remote content identifier, forwarding indication information and message receiver information, wherein the forwarding indication information indicates a message form corresponding to the second service system; the first service system acquires a message content according to the remote message forwarding request when determining that a message is required to be sent from the first service system to the second service system according to the forwarding indication information, generates a first service message, the first service message at least containing the message content and the message receiver information, and then sends the first service message to the gateway;
the gateway is configured to convert the first service message into a second service message and send the second service message to the second service system, wherein the gateway is dedicated for realizing interworking between the first service system and the second service system; and
the second service system is configured to send the second service message to a message receiver.

Optionally, the system further includes a remote server, wherein
the first service system is specifically configured to acquire all of message contents or a part of message contents from the remote server according to the remote content identifier.

Optionally, the first service system is further configured to send a remote content identifier corresponding to the first service message to a message sending client, and send the first service message to the gateway after receiving the remote content identifier submitted by the message sending client.

The technical solution of the disclosure is described below with reference to the drawings and specific embodiments in detail.

### Embodiment 1

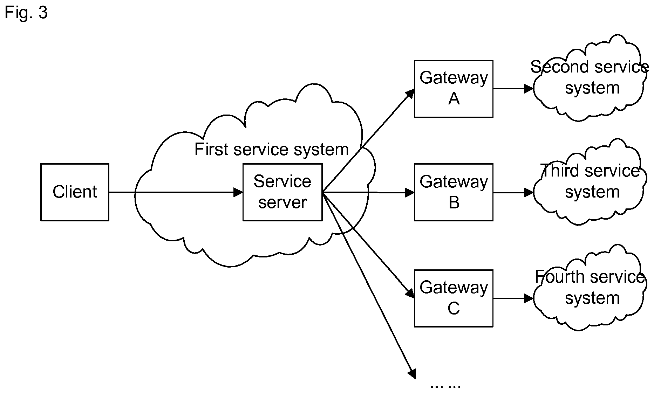

Fig. 3 is a structure diagram of a system according to embodiment 1 of the disclosure, and as shown in Fig. 3, in the embodiment, a service server in a first service system interworks with a second service system through a gateway A, interworks with a third service system through a gateway B, and interworks with a fourth service system through a gateway C.

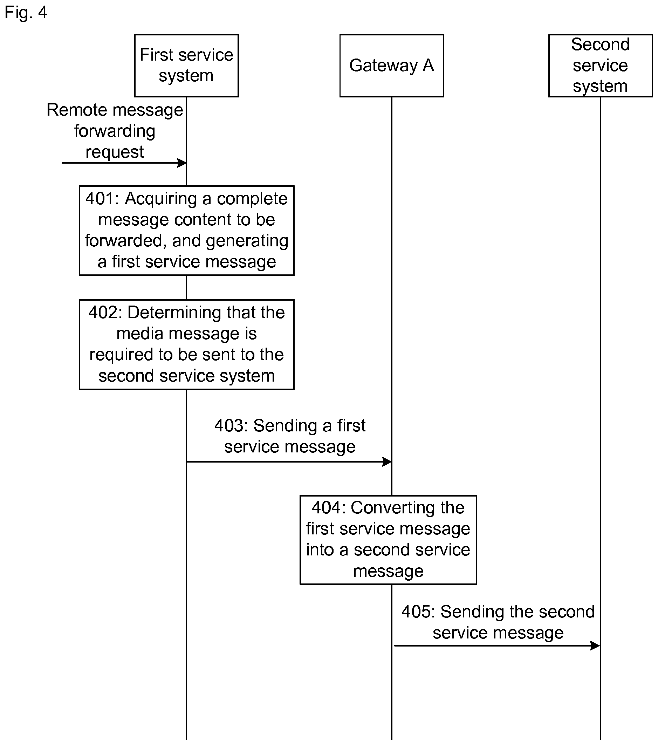

Fig. 4 is a flowchart of signalling of the embodiment, and the process specifically includes the following steps.

Step 401: A client sends a remote message forwarding request to a service server of the first service system, the remote message forwarding request at least containing remote message identifier information, forwarding indication information and message receiver information, and the service server of the first service system acquires an original message content, i.e. acquiring a complete message content to be forwarded, according to the remote message identifier information after receiving the remote message forwarding request, and generates a first service message; and the first service message should be finally sent to the second service system according to a request of a user.

The message content may be a certain media message in a remote network server, or may include a part of remote message (for example, a message packaged by virtue of an MIME protocol) or a media content (for example, a picture or an audio clip). If a part of contents of a message to be forwarded are located in a certain remote server, a complete remote message identifier (which can be a URL) may be acquired by a conventional technical method, and then the client forwards the message in the remote server in a specific service form according to the acquired remote message identifier. Without loss of generality, the following embodiment is described by taking the forwarding of a complete remote message as an example.

If SMTP is adopted between the client and the server, the remote identifier of the message to be forwarded together with the forwarding indication information is sent as a parameter;
for example,
M: BURL imap://bob.ar@example.org/Sent;UIDVALIDITY=387899045/;
uid=45/;urlauth=submit+bar:internal:
91354a473744909de610943775f92038;forward-SMS

In the above example, forward=SMS is the forwarding indication information, and the other part is the remote message identifier.

It should be noted that if the message client sends the remote message forwarding request by virtue of Internet Message Access Protocol (IMAP) and the condition that the message includes a part of remote contents is taken as an example, a new content and a remote content identifier may be sent to the server through an APPEND instruction (or another message sending instruction); an identifier of the part of remote contents may be included in text information uploaded by APPEND, and a forwarding request identifier may be contained as a parameter of a receiver address, for example, alice@example.com;forward=SMS.

If the message client sends the remote message forwarding request by virtue of Session Initiation Protocol (SIP) and the condition that the message includes a part of remote contents is taken as an example, then a new content and a remote content identifier may be sent to the server through SIP:MESSAGE (or another method for message sending), an identifier of the part of remote contents may be included by including remote content information "message/external-body" into a header Content-Type and appending a remote link to a message body; and the forwarding request identifier may be contained as the parameter of the receiver address, for example, salice@example.com;forward=SMS.

If the SMTP is adopted to submit the message between the client and the server, and the client wants to forward a certain media or voice message in the server, the remote message forwarding request may be sent by two steps:
step 1: a remote message packaging process is executed;
   the client sends the remote message splice packaging request, specifically, the client sends a message, the message specifying the receiver information, the forwarding indication information and a message identifier (URL or message number) of a remote media or media message to be forwarded, i.e. the above example; the server packages the receiver information, the forwarding indication information and the media or media message to be forwarded specified by the message identifier to generate a new media message after receiving the message, and returns an identifier (message number or URL) of the new media message to the client; if the identifier of the packaged message returned by the server is the message number, the client may further send a message to the server to acquire a new URL;
step 2: the client submits the remote content identifier to the server.

An SMTP-based BURL command may be adopted to submit the remote identifier to the server.

Step 402: The service server of the first service system determines that the media message is required to be sent to the second service system (for example, a short message service system, an MMS system and the like) according to the forwarding indication information contained in the remote message forwarding request.

Step 403: The service server of the first service system sends a first media message to the gateway A dedicated for interworking with the second service system; in the step, the first media message contains or does not contain the forwarding indication information.

Step 404: The gateway A converts the received first media message into a second media message which can be received by the second service system; for example, if the second service system is a short message service system, a submit_sm request consistent with Short Message Peer-to-Peer Protocol (SMPP) is generated; and if the second service system is an MMS system, an MM4_forward.REQ request consistent with a 3rd Generation Partnership Project (3GPP) related specification is generated.

After receiving an MIME-format message, the gateway extracts each information unit of the MIME-format message, converts voice information in the message into text information according to needs, finally selects a necessary text content as the user data of a short message, performs format conversion when it is necessary according to the receiver address contained in the MIME header, for example, finding a mobile phone number of the user by virtue of preset user information according to an E-mail address, and finally sends the converted short message through a short message gateway.

Step 405: The gateway A sends the second media message to the second service system; for example, if the second service system is a short message service system, the second media message, i.e. the submit_sm request, is sent to a Short Message-Service Centre (SM-SC) by virtue of the SMPP; and if the second service system is an MMS system, the second media message, i.e. the MM4_forward.REQ request, is sent through SMTP to an MMS relay server to which the receiver belongs.

### Embodiment 2

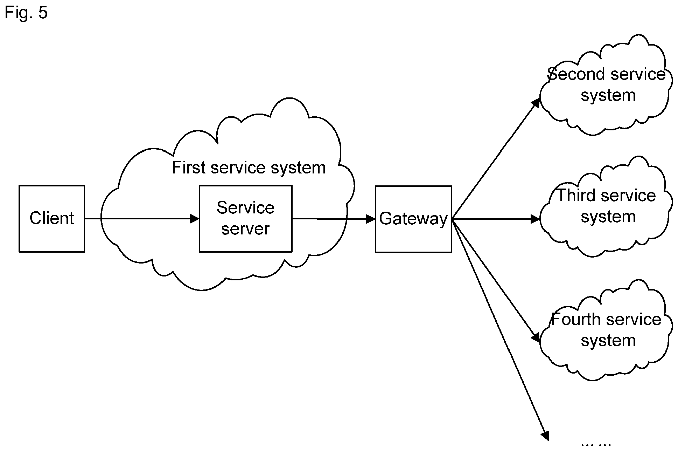

Fig. 5 is a structure diagram of a system according to the embodiment, and a service server in a first service system may interwork with multiple service systems through a gateway, including a second service system, a third service system, a fourth service system and the like.

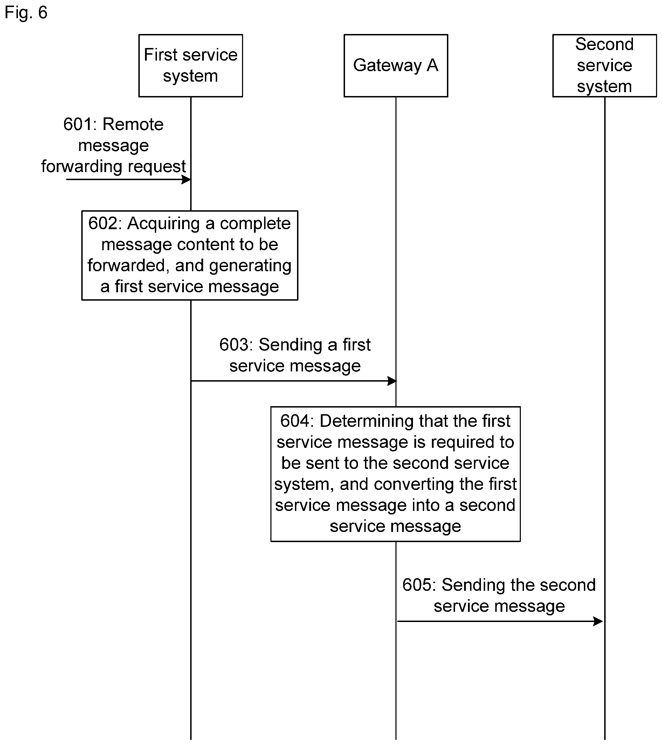

Fig. 6 is a flowchart of signalling of the embodiment, and the process specifically includes the following steps.

Step 601: A client sends a remote message forwarding request to the service server of the first service system;
if the SMTP is adopted between the client and the server, a remote identifier of a message to be forwarded together with forwarding indication information is sent as a parameter;
for example:
M: BURL imap://bob.ar@example.org/Sent;UIDVALIDITY=387899045/;
uid=45/;urlauth=submit+bar:internal:
   91354a473744909de610943775f92038;forward=SMS

In the above example, forward=SMS is the forwarding indication information, and the other part is a remote message identifier.

It should be noted that if the message client sends the remote message forwarding request by virtue of IMAP and the condition that the message includes a part of remote contents is taken as an example, then a new content and a remote content identifier may be sent to the server through an APPEND instruction (or another message sending instruction), an identifier of the part of remote contents may be included in text information uploaded by APPEND, and a forwarding request identifier may be contained as a parameter of a receiver address, for example, alice@example.com;forward=SMS.

If the message client sends the remote message forwarding request by virtue of SIP and the condition that the message includes a part of remote contents is taken as an example, then a new content and a remote content identifier may be sent to the server through SIP:MESSAGE (or another method for message sending), an identifier of the part of remote contents may be included by including remote content information "message/external-body" into a header Content-Type and appending a remote link to a message body; and the forwarding request identifier may be contained as the parameter of the receiver address, for example, salice@example.com;forward=SMS.

If the SMTP is adopted to submit the message between the client and the server, and the client wants to forward a certain media or voice message in the server, the remote message forwarding request may be sent by two steps:
step 1: a remote message packaging process is executed;
   the client sends a remote message splice packaging request, specifically, the client sends a message, the message specifying the receiver information, the forwarding indication information and a message identifier (Uniform Resource Locator (URL) or message number) of a remote media or media message to be forwarded, i.e. the above example; the server packages the receiver information, the forwarding indication information and the media or media message to be forwarded specified by the message identifier to generate a new media message after receiving the message, and returns an identifier (message number or URL) of the new media message to the client; if the identifier of the packaged message returned by the server is the message number, the client may further send a message to the server to acquire a new URL;
step 2: the client submits the remote content identifier to the server.

An SMTP-based BURL command may be adopted to submit the remote identifier to the server.

Step 602: The service server of the first service system receives the remote message forwarding request, acquires a complete content according to the remote message identifier contained in the remote message forwarding request, and generates a first media message according to a request of a user, wherein the media message should be finally sent to the second service system; therefore, the first media message contains the forwarding indication information indicating that a message receiver is located in the second service system.

For example, if the first media message is an E-mail or a visual voice mail, the forwarding indication information may be sent to the service server as a parameter in an SMTP instruction or through a header field in a message packet encapsulated by virtue of the MIME protocol.

The forwarding indication information is contained in an MIME header field parameter, and may be shown by an expanded parameter, for example, forward=SMS, contained by the Content-Type header to indicate that the message is expected to be forwarded to a short message system and finally reach the receiver in a short message form.

Step 603: The service server of the first service system sends the first media message to the gateway for interworking with the multiple other service systems; in the step, the first media message still contains the forwarding indication information.

Step 604: The gateway determines that the media message is required to be sent to the second service system (a short message service system, an MMS system and the like) according to the forwarding indication information contained in the first media message after receiving the first media message, and converts the received first media message into a second media message which can be received by the second service system; for example, if the second service system is a short message service system, a submit_sm request consistent with an SMPP is generated; and if the second service system is an MMS system, an MM4_forward.REQ request consistent with a 3GPP related specification is generated.

Step 605: The gateway sends the second media message to the second service system; for example, if the second service system is a short message service system, the second media message, i.e. the submit_sm request, is sent to an SM-SC through SMPP; and if the second service system is an MMS system, the second media message, i.e. the MM4_forward.REQ request, is sent through SMTP to an MMS relay server to which the receiver belongs.

By the solution of the embodiment of the disclosure, a message sending user can actively request to convert the media message into a message form selected by the message sending user for sending to the receiver, so that good user experiences are obtained.

The above are only the preferred embodiments of the disclosure and not intended to limit the scope of protection of the disclosure.

## Claims

1. A method for message sending between service systems comprising:
sending, by a message sending client, a remote message forwarding request to a network side, the remote message forwarding request at least containing a remote content identifier, forwarding indication information and message receiver information (101); and
acquiring, by the network side, a message content according to the remote content identifier of the remote message forwarding request, and sending the message content to a message receiver in a message form indicated by the forwarding indication information (102);
**characterized in that**,
the remote content identifier is a content number or a content Uniform Resource Identifier, URI; the sending, by the network side, of the message content to the message receiver in the message form indicated by the forwarding indication information comprises:
packaging and generating, by the network side, a remote message according to the message content, the message form indicated by the forwarding indication information and the message receiver information, and sending the remote content identifier corresponding to the packaged remote message to the message sending client; and after receiving, by the network side, the remote content identifier submitted by the message sending client, said remote content identifier corresponding to the packaged remote message, sending the packaged remote message to the message receiver.

2. The method according to claim 1, wherein acquiring, by the network side, the message content according to the remote message forwarding request, and sending the message content to the message receiver in the message form indicated by the forwarding indication information comprises:
receiving, by a first service system, the remote message forwarding request from the message sending client, the forwarding indication information in the remote message forwarding request indicating the message form corresponding to a second service system; and
acquiring, by the first service system, the message content according to the remote message forwarding request, and sending the message content through the second service system to the message receiver in the message form which is indicated by the forwarding indication information and corresponds to the second service system.

3. The method according to claim 2, wherein
when the remote content identifier indicates all of message contents to be forwarded to the message receiver, acquiring, by the first service system, the message content according to the remote message forwarding request comprises: acquiring all the message contents according to the remote content identifier; and
when the remote content identifier indicates a part of message contents to be forwarded to the message receiver, and the remote message forwarding request further contains a part of message contents, acquiring, by the first service system, the message content according to the remote content identifier comprises: acquiring a part of message contents according to the remote content identifier, and acquiring all the message contents by combining the part of message contents acquired according to the remote content identifier and the part of message contents contained in the remote message forwarding request;
wherein all the message contents or the part of message contents are acquired from a remote server according to the remote content identifier.

4. The method according to any one of claims 2 to 3, wherein acquiring, by the first service system, the message content according to the remote message forwarding request, and sending the message content in the message form which is indicated by the forwarding indication information and corresponds to the second service system through the second service system comprises:
determining, by the first service system, that a message is required to be sent from the first service system to another service system according to the forwarding indication information in the remote message forwarding request, acquiring a message content according to the remote message forwarding request, and generating a first service message, the first service message at least containing the message content, the forwarding indication information and message receiver information (402);
sending, by the first service system, the first service message to a gateway for interworking with multiple service systems, the multiple service systems comprising the second service system(403); and
determining, by the gateway for interworking with the multiple service systems, that the first service message is required to be sent to the second service system, converting the first service message or the first service message from which the forwarding indication information has been removed into a second service message according to the forwarding indication information contained in the first service message(404), and sending the second service message to the message receiver through the second service system(405).

5. The method according to any one of claims 2 to 3, wherein acquiring, by the first service system, the message content according to the remote message forwarding request, and sending the message content through the second service system to the message receiver in the message form which is indicated by the forwarding indication information and corresponds to the second service system comprises:
determining, by the first service system, that a message is required to be sent from the first service system to the second service system according to the forwarding indication information, acquiring a message content according to the remote message forwarding request, and generating a first service message, the first service message at least containing the message content and message receiver information;
sending, by the first service system, the first service message to a gateway dedicated for interworking with the second service system; and
converting, by the gateway dedicated for interworking with the second service system, the first service message into a second service message, and sending the second service message to the message receiver through the second service system.

6. The method according to claim 4, wherein when the first service message is a message encapsulated by a Multipurpose Internet Mail Extensions, MIME, protocol, containing the forwarding indication information into the first service message comprises: the forwarding indication information is contained into header information in a message packet encapsulated by the MIME protocol, or the forwarding indication information is contained as a parameter of sending of a forwarding request instruction.

## Patentansprüche

1. Ein Verfahren zum Senden von Nachrichten zwischen Dienstsystemen, das Folgendes umfasst:
das Senden, durch einen Nachrichten-Sende-Client, einer Anfrage zur Weiterleitung einer Fernnachricht an eine Netzwerkseite, wobei die Anfrage zur Weiterleitung der Fernnachricht mindestens einen Remote-Content-Identifier, Weiterleitungsanzeigeinformationen und Nachrichtenempfängerinformationen enthält (101); und
das Erfassen, durch die Netzwerkseite, eines Nachrichteninhalts entsprechend dem Remote-Content-Identifier der Anfrage zur Weiterleitung der Fernnachricht, und das Senden des Nachrichteninhalts an einen Nachrichtenempfänger in einer Nachrichtenform, die durch die Weiterleitungsanzeigeinformationen angegeben wird (102);
**dadurch gekennzeichnet, dass**
der Remote-Content-Identifier eine Content-Nummer oder ein Content-Uniform Resource Identifier, URI, ist;
wobei das Senden, durch die Netzwerkseite, des Nachrichteninhalts an den Nachrichtenempfänger in der Nachrichtenform, die durch die Weiterleitungsanzeigeinformationen angegeben wird, Folgendes umfasst:
das Verpacken und Erzeugen, durch die Netzwerkseite, einer Remote-Nachricht entsprechend dem Nachrichteninhalt, wobei die Nachrichtenform durch die Weiterleitungsanzeigeinformationen und die Nachrichtenempfängerinformationen angegeben wird; und das Senden des Remote-Content-Identifiers, der der verpackten Fernnachricht entspricht, an den Nachrichten-Sende-Client; und
nach dem Empfang, durch die Netzwerkseite, des Remote-Content-Identifiers, der vom Nachrichten-Sende-Client gesendet wurde, wobei der Remote-Content-Identifier der verpackten Fernnachricht entspricht, das Senden der verpackten Fernnachricht an den Nachrichtenempfänger.

2. Das Verfahren gemäß Anspruch 1, wobei der Erfassen, durch die Netzwerkseite, des Nachrichteninhalts entsprechend der Anfrage zur Weiterleitung der Fernnachricht und das Senden des Nachrichteninhalts an den Nachrichtenempfänger in der Nachrichtenform, die durch die Weiterleitungs-Anzeige-Informationen angegeben wird, Folgendes umfasst:
das Empfangen, durch ein erstes Dienstsystem, der Anfrage zur Weiterleitung der Fernnachricht vom Nachrichten-Sende-Client, wobei die Weiterleitungs-Anzeige-Informationen in der Anfrage zur Weiterleitung der Fernnachricht die Nachrichtenform angeben, die einem zweiten Dienstsystem entspricht; und
das Erfassen, durch das erste Dienstsystem, des Nachrichteninhalts entsprechend der Anfrage zur Weiterleitung der Fernnachricht; und das Senden des Nachrichteninhalts über das zweite Dienstsystem an den Nachrichtenempfänger in der Nachrichtenform, die von den Weiterleitungs-Anzeige-Informationen angegeben wird und dem zweiten Dienstsystem entspricht.

3. Verfahren gemäß Anspruch 2, worin,
wenn der Remote-Content-Identifier alle Nachrichteninhalte angibt, die an den Nachrichtenempfänger weitergeleitet werden sollen, das Erfassen, durch das erste Dienstsystem, des Nachrichteninhalts entsprechend der Anfrage zur Weiterleitung der Fernnachricht Folgendes umfasst: das Erfassen aller Nachrichteninhalte entsprechend dem Remote-Content-Identifier; und
wenn der Remote-Content-Identifier einen Teil der Nachrichteninhalte angibt, die an den Nachrichtenempfänger weitergeleitet werden sollen, und die Anfrage zur Weiterleitung der Fernnachricht weiter einen Teil der Nachrichteninhalte enthält, das Erfassen, durch das erste Dienstsystem, des Nachrichteninhalts entsprechend dem Remote-Content-Identifier Folgendes umfasst: das Erfassen eines Teils der Nachrichteninhalte entsprechend dem Remote-Content-Identifier und das Erfassen aller Nachrichteninhalte durch Kombinieren des Teils der Nachrichteninhalte, die entsprechend dem Remote-Content-Identifier erfasst wurden, mit dem Teil der Nachrichteninhalte, die in der Anfrage zur Weiterleitung der Fernnachricht enthalten sind;
wobei alle Nachrichteninhalte oder der Teil der Nachrichteninhalte entsprechend dem Remote-Content-Identifier von einem Remote-Server gewonnen werden.

4. Das Verfahren gemäß einem beliebigen der Ansprüche 2 bis 3, wobei das Erfassen, durch das erste Dienstsystem, des Nachrichteninhalts entsprechend der Anfrage zur Weiterleitung der Fernnachricht und das Senden des Nachrichteninhalts in der Nachrichtenform, die von den Weiterleitungs-Anzeige-Informationen angezeigt wird und dem zweiten Dienstsystem entspricht, durch das zweite Dienstsystem Folgendes umfasst:
das Bestimmen, durch das erste Dienstsystem, dass eine Nachricht vom ersten Dienstsystem an ein anderes Dienstsystem entsprechend den Weiterleitungs-Anzeige-Informationen in der Anfrage zur Weiterleitung der Fernnachricht gesendet werden soll; das Erfassen eines Nachrichteninhalts entsprechend der Anfrage zur Weiterleitung der Fernnachricht und das Generieren einer ersten Dienstnachricht, wobei die erste Dienstnachricht mindestens den Nachrichteninhalt, die Weiterleitungs-Anzeige-Informationen und die Nachrichten-Empfänger-Informationen enthält (402);
das Senden, durch das erste Dienstsystem, der ersten Dienstnachricht an ein Gateway zur Zusammenarbeit mit mehreren Dienstsystemen, wobei die mehreren Dienstsysteme das zweite Dienstsystem umfassen (403); und
das Bestimmen, durch das Gateway zur Zusammenarbeit mit den mehreren Dienstsystem, dass die erste Dienstnachricht an das zweite Dienstsystem gesendet werden soll; das Umwandeln der ersten Dienstnachricht oder der ersten Dienstnachricht, aus der die Weiterleitungs-Anzeige-Informationen entfernt wurden, in eine zweite Dienstnachricht entsprechend den Weiterleitungs-Anzeige-Informationen, die in der ersten Dienstnachricht enthalten sind (404); und das Senden der zweiten Dienstnachricht an den Nachrichtenempfänger über das zweite Dienstsystem (405).

5. Das Verfahren gemäß einem beliebigen der Ansprüche 2 bis 3, wobei das Erfassen, durch das erste Dienstsystem, des Nachrichteninhalts entsprechend der Anfrage zur Weiterleitung der Fernnachricht und das Senden des Nachrichteninhalts über das zweite Dienstsystem an den Nachrichtenempfänger in der Nachrichtenform, die durch die Weiterleitungs-Anzeige-Informationen angegeben wird und dem zweiten Dienstsystem entspricht, Folgendes umfasst:
das Bestimmen, durch das erste Dienstsystem, dass eine Nachricht vom ersten Dienstsystem an das zweite Dienstsystem entsprechend den Weiterleitungs-Anzeige-Informationen gesendet werden soll; das Erfassen eines Nachrichteninhalts entsprechend der Anfrage zur Weiterleitung der Fernnachricht und das Generieren einer ersten Dienstnachricht, wobei die erste Dienstnachricht mindestens den Nachrichteninhalt und Nachrichten-Empfänger-Informationen enthält;
das Senden, durch das erste Dienstsystem, der ersten Dienstnachricht an ein Gateway, das für die Zusammenarbeit mit dem zweiten Dienstsystem reserviert ist; und
das Umwandeln, durch das für die Zusammenarbeit mit dem zweiten Dienstsystem reservierte Gateway, der ersten Dienstnachricht in eine zweite Dienstnachricht, und das Senden der zweiten Dienstnachricht an den Nachrichtenempfänger über das zweite Dienstsystem.

6. Das Verfahren gemäß Anspruch 4, worin, wenn die erste Dienstnachricht eine Nachricht ist, die durch ein Multipurpose Internet Mail Extensions, MIME, Protokoll verkapselt ist, das Enthaltensein der Weiterleitungs-Anzeige-Informationen in der ersten Dienstnachricht Folgendes umfasst: Die Weiterleitungs-Anzeige-Informationen sind in Header-Informationen in einem Nachrichtenpaket enthalten, das durch das MIME-Protokoll verkapselt ist; oder die Weiterleitungs-Anzeige-Informationen sind als Sendeparameter einer Weiterleitungs-Anfrage-Anweisung enthalten.

## Revendications

1. Procédé d'envoi de message entre des systèmes de services, comprenant :
l'envoi, par un client d'envoi de message, d'une requête d'expédition de message distant à un côté réseau, la requête d'expédition de message distant contenant au moins un identificateur de contenu distant, des informations d'indication d'expédition et des informations de récepteur de message (101) ; et
l'acquisition, par le côté réseau, d'un contenu de message conformément à l'identificateur de contenu distant présent dans la requête d'expédition de message distant, et l'envoi du contenu de message à un récepteur de message sous une forme de message indiquée par les informations d'indication d'expédition (102) ;
**caractérisé en ce que** :
l'identificateur de contenu distant est un numéro de contenu ou un identificateur universel de ressource, URI, de contenu ; et
l'envoi, par le côté réseau, du contenu de message au récepteur de message sous la forme de message indiquée par les informations d'indication d'expédition comprend :
l'empaquetage et la génération, par le côté réseau, d'un message distant conformément au contenu de message, à la forme de message indiquée par les informations d'indication d'expédition et aux informations de récepteur de message, et l'envoi de l'identificateur de contenu distant qui correspond au message distant empaqueté au client d'envoi de message ; et
après réception, par le côté réseau, de l'identificateur de contenu distant soumis par le client d'envoi de message, ledit identificateur de contenu distant correspondant au message distant empaqueté, l'envoi du message distant empaqueté au récepteur de message.

2. Procédé selon la revendication 1, dans lequel l'acquisition, par le côté réseau, du contenu de message conformément à la requête d'expédition de message distant, et l'envoi du contenu de message au récepteur de message sous la forme de message indiquée par les informations d'indication d'expédition, comprennent :
la réception, par un premier système de services, de la requête d'expédition de message distant en provenance du client d'envoi de message, les informations d'indication d'expédition présentes dans la requête d'expédition de message distant indiquant la forme de message qui correspond à un second système de services ; et
l'acquisition, par le premier système de services, du contenu de message conformément à la requête d'expédition de message distant, et l'envoi du contenu de message par l'intermédiaire du second système de services au récepteur de message sous la forme de message qui est indiquée par les informations d'indication d'expédition et correspond au second système de services.

3. Procédé selon la revendication 2, dans lequel :
quand l'identificateur de contenu distant indique l'ensemble de contenus de message à expédier au récepteur de message, l'acquisition, par le premier système de services, du contenu de message conformément à la requête d'expédition de message distant comprend : l'acquisition de l'ensemble des contenus de message conformément à l'identificateur de contenu distant ; et
quand l'identificateur de contenu distant indique une partie de contenus de message à expédier au récepteur de message, et la requête d'expédition de message distant contient en outre une partie de contenus de message, l'acquisition, par le premier système de services, du contenu de message conformément à l'identificateur de contenu distant comprend : l'acquisition d'une partie de contenus de message conformément à l'identificateur de contenu distant, et l'acquisition de l'ensemble des contenus de message par combinaison de la partie de contenus de message acquise conformément à l'identificateur de contenu distant et de la partie de contenus de message contenue dans la requête d'expédition de message distant ;
dans lequel l'ensemble des contenus de message ou la partie de contenus de message sont acquis auprès d'un serveur distant conformément à l'identificateur de contenu distant.

4. Procédé selon l'une quelconque des revendications 2 à 3, dans lequel l'acquisition, par le premier système de services, du contenu de message conformément à la requête d'expédition de message distant, et l'envoi du contenu de message sous la forme de message qui est indiquée par les informations d'indication d'expédition et correspond au second système de services par l'intermédiaire du second système de services, comprennent :
la détermination, par le premier système de services, qu'un message doit être envoyé du premier système de services à un autre système de services conformément aux informations d'indication d'expédition présentes dans la requête d'expédition de message distant, l'acquisition d'un contenu de message conformément à la requête d'expédition de message distant, et la génération d'un premier message de service, le premier message de service contenant au moins le contenu de message, les informations d'indication d'expédition et des informations de récepteur de message (402) ;
l'envoi, par le premier système de services, du premier message de service à une passerelle d'interfonctionnement avec de multiples systèmes de services, les multiples systèmes de services comprenant le second système de services (403) ; et
la détermination, par la passerelle d'interfonctionnement avec les multiples systèmes de services, que le premier message de service doit être envoyé au second système de services, la conversion du premier message de service ou du premier message de service duquel les informations d'indication d'expédition ont été retirées en un second message de service conformément aux informations d'indication d'expédition contenues dans le premier message de service (404), et l'envoi du second message de service au récepteur de message par l'intermédiaire du second système de services (405).

5. Procédé selon l'une quelconque des revendications 2 à 3, dans lequel l'acquisition, par le premier système de services, du contenu de message conformément à la requête d'expédition de message distant, et l'envoi du contenu de message par l'intermédiaire du second système de services au récepteur de message sous la forme de message qui est indiquée par les informations d'indication d'expédition et correspond au second système de services, comprennent :
la détermination, par le premier système de services, qu'un message doit être envoyé du premier système de services au second système de services conformément aux informations d'indication d'expédition, l'acquisition d'un contenu de message conformément à la requête d'expédition de message distant, et la génération d'un premier message de service, le premier message de service contenant au moins le contenu de message et des informations de récepteur de message ;
l'envoi, par le premier système de services, du premier message de service à une passerelle dédiée à l'interfonctionnement avec le second système de services ; et
la conversion, par la passerelle dédiée à l'interfonctionnement avec le second système de services, du premier message de service en un second message de service, et l'envoi du second message de service au récepteur de message par l'intermédiaire du second système de services.

6. Procédé selon la revendication 4, dans lequel quand le premier message de service est un message encapsulé par un protocole d'extensions multifonctions du courrier Internet, MIME, l'inclusion des informations d'indication d'expédition dans le premier message de service comprend : l'inclusion des informations d'indication d'expédition dans des informations d'en-tête d'un paquet de message encapsulé par le protocole MIME, ou l'inclusion des informations d'indication d'expédition sous la forme d'un paramètre d'envoi d'une instruction de requête d'expédition.
